Europäisches Patentamt

**European Patent Office** (11) Publication number: **0 042 922**

Office européen des brevets **A1**

(12) **EUROPEAN PATENT APPLICATION**

(21) Application number: **81102941.2**

(22) Date of filing: **16.04.81**

(51) Int. Cl.³: **C 09 D 11/00**

(30) Priority: **30.06.80 US 164659**

(43) Date of publication of application:
**06.01.82 Bulletin 82/1**

(84) Designated Contracting States:
**DE FR GB IT**

(71) Applicant: **International Business Machines Corporation**

**Armonk, N.Y. 10504(US)**

(72) Inventor: **Edds, Kenneth Eugene**
**Route 4**
**Versailles, KY 40383(US)**

(72) Inventor: **Elbert, Donald Leo**
**601 Lake Clair Court**
**Lexington, KY 40502(US)**

(72) Inventor: **Gill, Anna Marie**
**952 Villa Dr., Apt. 4**
**Richmond, KY 40475(US)**

(74) Representative: **Bonneau, Gérard**
**COMPAGNIE IBM FRANCE Département de Propriété Industrielle**
**F-06610 La Gaude(FR)**

(54) **Infrared and visible dual dye ink for ink jet printers.**

㊗ Dual dye ink formulations for ink jet printers having both Sulfur Black 1 and Direct Black 163 or Direct Black 19 as the dyes to provide absorbence of light in both the visual and infrared ranges. Absorbence of infrared facilitates optical character recognition by conventional photoconductors.

EP 0 042 922 A1

# INFRARED AND VISIBLE DUAL DYE INK FOR
# INK JET PRINTERS

## Description

## Technical Field

This invention relates to inks for ink jet printing, and, more specifically, to a dual dye ink having good absorbence of light in both the visible and the infrared range.

## Background Art

Ink formulations for jet printing ink require many different characteristics which have not been found in a suitable ink having a single dye. One important characteristic where machine character recognition is to be conducted is absorbence in the infrared range, specifically 800 to 900 millimicrons (nm). This is because silicon photoconductors used in character recognition often have peak responses in that range. Absorbence in the visible range remains important so that the printing may be read conventionally. In U.S. Patent No. 3,870,528 operative inks are disclosed having two dyes, nigrosine to absorb infrared radiation and Direct Black 4 or Direct Black 38 to absorb in the visible range. The formulations of that patent would no longer be considered for actual use because both the Direct Black 4 and the Direct Black 38 are not now readily commercially available.

Jet printing inks optimally satisfy a number of demanding criteria including: 1) permanence after printing, particularly including resistance to water; 2) virtually total freedom from agglomeration, both during use and in their storage environment; 3) low toxicity; 4) ideal characteristics of electrical conductivity, drop formation, and flight characteristics to conform with the printer design; 5) consistent maintenance of desirable characteristics in varying environments where the ink might be stored or used; 6) and economic and technical feasibility of manufacture and use of the ink in large quantities.

A number of desirable characteristics, such as resistance to microorganisms and water fastness, are primarily obtained by the action of certain ingredients in the preferred formulations, as will be disclosed in detail below. Unless otherwise noted, the use of such ingredients for such purposes was prior to the present invention and forms no part of it, except in combinations specifically including the two specified dyes, the use of the two specified dyes together being considered the essential contribution of this invention. Also, the use of two dyes together in an ink formulation appears in various forms in the prior art, U.S. Patent No. 3,870,528, mentioned in the foregoing, being cited as the best convenient and tangible illustration as it is published and involves jet ink having absorbence at two frequencies, the same objectives to which this invention is directed.

Federal Republic of Germany Patent 2,818,573, published February 11, 1978, discloses ink jet printing inks in which the dye is Sulfur Black 1 alone. Some example formulas include N-methyl-2-pyrrolidone, said to be a component of an anti-foaming agent mixture, and sodium carbonate. Formulations closely similar to those disclosed herein employing only Direct Black 19 as the dye were known prior to the present invention. Although similar formulations employing Direct Black 163 were not necessarily known and successfully tested, it is acknowledged that the possibility of substitution of a new Direct Black dye, such as D.B. 163, for a previously used Direct Black dye, would be routinely considered by those in the field of development of improved inks for ink jet printers.

## Summary of the Invention

The object of the invention is therefore an infrared and visible dual dye ink comprising Sulfur Black 1 and a dye selected from the group consisting of Direct Black 163 and

3

Direct Black 19. Included in the ink are materials the formation of agglomerations.

## Description of the Invention

In the following, reference to the Color Index refers to the
well known, authoritative publication by that name published
by the Society of Dyes and Colorists in cooperation with the
American Association of Textile Chemists and Colorists.
Direct Black 163 is not found in the 19th edition, the most
recent, but is found in Additions and Amendments, Number 15,
April 1975 at page 523.

Direct Black 163 is defined as a trisazo dye It is obtained
from Sandoz, Inc.

The structure of Direct Black 19 is disclosed in the Color
Index. It is a highly resonant polyazo molecule with nitrogen
and sulfonate substituents.

The empirical formula of Sulfur Black 1 is discussed in the
Color Index, along with the manufacturing process.

These dyes are obtained from normal commercial sources. It
will be understood, however, that the demanding characteristics of jet ink typically require more than routine commercial purity. The Direct Black 163 and Direct Black 19 dyes
may be washed satisfactorily in moderately polar solvents,
such as methanol. The preferred source, however, of the adequately pure dyes for this invention is by obtaining exceptionally purified dyes from the commercial supplier. The typical
problem when purity is marginally less than adequate is one of
agglomerations forming with or by action of the impurities.

Direct Black 163 of adequately high purity is obtained from
Sandoz, Inc. by purchase of that firm's Carta Black 2GT, 200%.
The 200% designation refers to a ratio of dye to salts which
has been found to indicate adequate purity for the purposes of
this invention.

Direct Black 19 of adequately high purity is obtained from Sandoz, Inc. by purchase of that firm's Carta Black BI. The BI is a designation which has become a specific identification to that firm of a dye manufactured to have a specific level of purity, which is of adequate purity for the purposes of this invention.

Sulfur Black 1 of adequately high purity is obtained from the Sodyeco Division of Martin Marietta Corporation by specifying the dye as manufactured to the highest level of purity available in amounts of any bulk from Sodyeco.

Sodium Omadine is a brand named biocide of Olin Corporation. It is used to prevent the growth of microscopic organisms that could clog filters and printer mechanisms. Chemically, it is 90% sodium 2-pyridinethiol-1-oxide and 10% inert ingredients.

Hampene 220 is a brand named sequestering agent of W. R. Grace and Company. It is used to sequester heavy metals in the ink which might otherwise form insoluble precipitates. Chemically, it is tetra-sodium ethylenediaminetetraacetate.

Carbowax 200 is a brand named product of Union Carbide Corporation. It is used to prevent the formation of a hard crust on the nozzle tip as water evaporates during shutdown. Such a crust hinders stream start-up. Chemically, it is polyethylene glycol of 200 average molecular weight. Many other similar materials known in this art can be substituted for the Carbowax 200.

N-methyl-2-pyrrolidone is the chemical name for a material used in these formulas as solvent for the dyes.

The 2MB is a water fastness agent and has some anti-crusting activity; it is a polyamine having full substitution of the primary nitrogens. Specifically, it is a 2 hydroxyethyl substituted polyethyleneimine having 7 or more nitrogen atoms per molecule. The material is a product of Cordova Chemical Company.  Waterfastness is the characteristic of resistance of printing to wet rubbing and other water exposure.

Butyl Cellosolve is a well known brand named product used as a paper penetrant.  Chemically, it is ethylene-glycol-monobutyl ether.  Many other similar materials known in this art can be substituted for the Butyl Cellosolve.

Sodium carbonate and sodium bicarbonate function as buffers.

Example I

D.B. 163 and Sulfur Black 1

| Compoment | Percent by Weight |
|---|---|
| Distilled water | 77.15 |
| Sodium Omadine | 0.10 |
| Hampene 220 | 0.20 |
| Carbowax 200 | 5.00 |
| N-methyl-2-pyrrolidone | 4.00 |
| 2MB | 6.00 |
| Butyl Cellosolve | 3.00 |
| Sulfur Black 1 | 1.00 |
| Direct Black 163 | 3.25 |
| Sodium carbonate | 0.20 |
| Sodium bicarbonate | 0.10 |
| Sodium hydroxide | As required |

Final characteristics:  pH 10.3; Viscosity 2.28 centistokes @ 70°F; and Density 1.038 gr./cm.$^3$.

## Example II
### D.B. 19 and Sulfur Black 1

| Component | Percent by Weight |
|---|---|
| Distilled Water | 74.25 |
| Sodium Omadine | 0.10 |
| Hampene 220 | 0.20 |
| Carbowax 200 | 5.00 |
| N-methyl-2-pyrrolidone | 4.00 |
| 2MB | 7.00 |
| Butyl Cellosolve | 3.00 |
| Sulfur Black 1 | 3.00 |
| Direct Black 19 | 3.25 |
| Sodium Carbonate | 0.20 |
| Sodium Hydroxide | As required |

Final characteristics: pH 10.1; Viscosity 2.77 centistokes @ 70° F; and Density 1.058 gr./cm.$^3$.

## Examples III - VIII

| Component | Percent by Weight - By Example | | | | | |
|---|---|---|---|---|---|---|
| | III | IV | V | VI | VI | VIII |
| Distilled Water | 80.4 | 75.4 | 77.7 | 84.45 | 74.5 | 71.7 |
| Sodium Omadine | 0.1 | 0.1 | 0.1 | 0.1 | 0.1 | 0.1 |
| Hampene 220 | 0.2 | 0.2 | 0.2 | 0.2 | 0.2 | 0.2 |
| Carbowax 200 | 5.0 | 5.0 | 5.0 | 5.0 | 5.0 | 5.0 |
| N-methyl-2-pyrrolidone | 4.0 | 4.0 | 4.0 | 0 | 4.0 | 4.0 |
| 2MB | 6.0 | 6.0 | 5.0 | 3.0 | 7.0 | 8.0 |
| Butyl Cellosolve | 0 | 1.0 | 3.0 | 1.0 | 3.0 | 3.0 |
| Sulfur Black 1 | 1.0 | 1.0 | 3.0 | 1.0 | 3.0 | 3.0 |
| Direct Black 163 | 3.25 | 3.25 | 2.0 | 3,25 | 3.25 | 5.0 |

Based on tests of all of the listed examples and general experience with jet inks of such formulations, the components can vary in relative amount without significant problems with the range as follows:

| Component | Range of Variations<br>Percent - By Weight |
|---|---|
| Sodium Omadine | 0.05 - 0.5 |
| Hampene 200 | 0.1 - 0.5 |
| Carbowax 200 | 3.0 - 15.0 |
| N-methyl-2-pyrrolidone | 0 - 8.0 |
| 2MB | 3.0 - 10.0 |
| Butyl Cellosolve | 0 - 6.0 |
| Sulfur Black 1 | 0.5 - 6.0 |
| Direct Black 163 or<br> Direct Black 19 | 2.0 - 6.0 |

Procedures

All equipment is cleaned and rinsed with a distilled water before use. Glass containers are not used to avoid silicon contamination. The ink components are thoroughly mixed and the composition is then filtered to remove any particulate matter in the composition greater than 0.22 microns to ensure that the nozzle of the printer will remain unobstructed during printing.

Characteristics

The inks of all of the examples have the desired satisfactory optical properties in both the visual and infrared ranges. Printing by the inks can be read by silicon photoconductors having peak responses in the 800 to 900 nm range without enhancement of contrast by special filters. If necessary and

0042922

otherwise desirable, enhancement of contrast in the infrared range is achieved by increasing the amount of Sulfur Black in the ink formula.

Both inks function and respond well during actual printing. The ink of Example I is preferred. It resists agglomeration when left in contact with a nozzle of commerical acetal resin, an environment which does occur in jet printers.

It will be apparent that skilled jet ink chemists can modify the disclosed formulas greatly, particularly with respect to the non-dye ingredients, while employing the basic contributions of the present invention, and that, accordingly, patent coverage should not be limited to the specific examples disclosed, but should be as provided by law, with particular reference to the following claims.

CLAIMS

1. Infrared and visible dual dye ink characterized in that it comprises:

   water,

   Sulfur Black 1,

   a dye is a Direct Black selected from the group consisting of Direct Black 163 and Direct Black 19, and

   materials inhibiting the formation of agglomerations in said ink.

2. Ink according to claim 1 in which said Sulfur Black is between 0.5 and 6 percent by weight of the ink and the Direct Black is between 2 and 6 percent by weight of the ink.

3. Ink according to claim 1 or 2 in which said Direct Black dye is Direct Black 163.

4. Ink according to claim 3 in which said Sulfur Black is in the order of magnitude of 1 percent by weight of the ink and the Direct Black 163 is in the order of magnitude of 3.25 percent by weight of the ink.

5. Ink acording to claim 1 or 2 in which said Direct Black dye is Direct Black 19.

6. Ink according to Claim 5 in which said Sulfur Black is in the order of magnitudeof 3.00 percent by weight of the ink and said Direct Black 19 is in the order of magnitude of 3.25 percent by weight of the ink.

7.    Ink according to any one of the preceding claims having the following: sodium 2-pyridinethiol-1-oxide as a biocide, tetrasodium ethylenediaminetetra-acetate as a sequestering agent; polyethyle glycol of 200 average molecular weight as a crust prevention agent; N-methyl-2-pyrrolidone as a solvent for the dyes; a 2-hydroxy substituted polyethyleneimine having at least 7 nitrogen atoms per molecule as a water fastness agent; and ethylene-glycol-nonobutyl ether as a paper penetrant.

8.    Ink according to claim 7 having the following ranges of amounts, by weight:  0.05 to 0.5 percent of sodium 2-pyridinethiol-1-oxide as a biocide; 0.1 to 0.5 percent of tetrasodium ethylenediaminetetraacetate as a sequestering agent; 3 to 15 percent of polyethylene glycol of 200 average molecular weight as a crust prevention agent; zero to 8 percent of N-methyl-2-pyrrolidone as a solvent for the dyes; 3 to 10 percent of a 2-hydroxy substituted polyethyleneimine having at least 7 nitrogen atoms per molecule as a water fastness agent; and zero to 6 percent of ethylene-glycol-monobutyl ether as a paper penetrant.

9.    Ink according to claim 4 and claim 8 also comprising sodium carbonate and sodium bicarbonate, having a pH of about 10.3, and having the said components in about the following proportions by weight:  Sulfur Black 1.00; Direct Black 163 3.25; water 77.15; the pyridinethiol 0.10; the tetraacetate 0.20; the polyethylene glycol 5.00; the pyrrolidone 4.00; the polyethyleneimine 6.00; and the ethylene-glycol-monobutyl ether 3.00.

10.   Ink according to claim 6 and claim 8 also comprising sodium carbonate, having a pH of about 10.1 and having the said components in about the following proportions by weight:  Sulfur Black 3.00; Direct Black 19 3.25; water 74.25; the pyridinethiol 0.10; the tetraacetate 0.20; the polyethylene glycol 5.00; the pyrrolidone 4.00; the polyethyleneimine 7.00; and the ethylene-glycol-monobutyl ether 3.00.

| | EUROPEAN SEARCH REPORT | |
|---|---|---|

## DOCUMENTS CONSIDERED TO BE RELEVANT

| Category | Citation of document with indication, where appropriate, of relevant passages | Relevant to claim |
|---|---|---|
| D,A | US - A - 3 870 528 (K.E. EDDS et al.)<br><br>* the whole document *<br><br>--- | 1 |
| A | FR - A - 2 388 870 (THE MEAD CORP.)<br><br>* claim 1 *<br><br>--- | 1 |
| A | DE - A - 2 160 464 (DICK CO.)<br><br>* claims 1 and 5 *<br><br>--------- | 1 |

**CLASSIFICATION OF THE APPLICATION (Int. Cl.³)**

C 09 D 11/00

**TECHNICAL FIELDS SEARCHED (Int. Cl.³)**

C 09 D 11/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 23-09-1981 | DE ROECK |

EPO Form 1503.1  06.78